# EUROPÄISCHE PATENTSCHRIFT

(11) **EP 0 671 423 B1**
(45) Veröffentlichungstag und Bekanntmachung des Hinweises auf die Patenterteilung: **06.05.1999**
(21) Anmeldenummer: 95102498.3
(22) Anmeldetag: 22.02.1995
(51) Int. Cl.: C08G 18/48, C08G 18/78, C08G 18/42

(54) **Heisshärtende Einkomponenten-Polyurethan-Reaktivmassen und deren Verwendung**
Thermosetting one-component-polyurethane reactive masses and use thereof
Masses réactives thermodurcissables de polyuréthanes à un composant et leur utilisation

(30) Priorität: 07.03.1994 DE 4407490
(43) Veröffentlichungstag der Anmeldung: 13.09.1995
(73) Patentinhaber: BAYER AG, 51368 Leverkusen (DE)
(72) Erfinder: Bock, Manfred, Dr., D-51375 Leverkusen (DE); Casselmann, Holger, Dr., D-51469 Bergisch Gladbach (DE); Drouvé, Werner, Dipl.-Ing., D-51375 Leverkusen (DE); Grögler, Gerhard, Dr., D-51375 Leverkusen (DE); Kopp, Richard, Dr., D-51061 Köln (DE); Hess, Heinrich, Dr., D-51061 Köln (DE)

(56) Entgegenhaltungen:
- EP-A- 0 353 572
- EP-A- 0 464 483
- EP-A- 0 510 476

## Beschreibung

Die vorliegende Erfindung betrifft ein Verfahren zur Herstellung heißhärtender Einkomponenten-Polyurethan-Reaktivmassen für Abdichtungs- und Beschichtungszwecke, welche niedrige Streich- oder Spritzviskositäten, gute Dauerflexibilität, gute Überbrennfestigkeit sowie gute Haftung auf kathodisch tauchlackierten Blechen besitzen. Insbesondere härten die erfindungsgemäßen heißhärtenden Einkomponenten-Polyurethan-Reaktivmassen auch nach längerer Lagerung in ungehärtetem Zustand in feuchter Umgebungsluft blasenfrei und mit unverminderter Endfestigkeit aus.

Die Verwendung von Suspensionen fester, durch oberflächliche Polyaddukt-Bildung desaktivierter Polyisocyanate in flüssigen oder niedrigschmelzenden Verbindungen mit gegenüber Isocyanaten reaktionsfähigen Wasserstoffatomen, insbesondere Polyhydroxyl- und Polyaminoverbindungen, als heißhärtende Verklebungs-, Dicht-, Beschichtungs- oder Vergußmassen sowie zur Herstellung von Formteilen ist bekannt (DE-OS 3 112 054, 3 228 723, 3 230 757, 3 403 499, 3 724 555, 3 919 696, 3 919 697).

Allen beschriebenen Einkomponenten-Polyurethan-Reaktivmassen ist jedoch gemeinsam, daß diese nicht sehr lange in unausgehärtetem Zustand feuchter Umgebungsluft ausgesetzt werden können, ohne daß bei der Heißhärtung Blasenbildung auftritt. Die blasige Struktur der Einkomponenten-Polyurethan-Reaktivmassen kommt zustande durch die Teilnahme eindiffundierten Wassers an der Aushärtereaktion. Diese Blasenbildung ist in hohem Maße unerwünscht, führt sie doch zu Einbußen bei der Festigkeit der ausgehärteten Reaktivmasse und bei deren Haftung. Darüberhinaus kann bei sehr hoher Feuchtigkeitsaufnahme durch die Einkomponenten-Polyurethan-Reaktivmassen die eigentliche Aushärtereaktion gänzlich ausbleiben. In der Praxis können frisch applizierte und noch nicht thermisch verfestigte Verklebungs-, Dicht- oder Beschichtungsmassen gegebenenfalls mehrere Tage der feuchten Umgebungsluft ausgesetzt sein, bevor sie den Einbrennofen passieren. Das ist beispielsweise in der Kfz-Produktion bei Bandstillstand über das Wochenende der Fall. Aus diesem Grund ist eine blasenfreie Aushärtung mit ausreichender Festigkeit nach längerer Exposition in feuchter Umgebungsluft für die Automobilindustrie von besonderer Bedeutung. Durch Verwendung von Polyetherpolyaminen oder durch Zugabe wasserabsorbierender Füllstoffe, beispielsweise Zeolithe, kann die Wasserreaktion zwar weitestgehend unterdrückt werden, jedoch müssen, bedingt durch die Mitverwendung dieser Rezepturbestandteile, anderweitige Nachteile in Kauf genommen werden. Aliphatische Amine sind nicht nur teuer, sie wirken auch ätzend auf die menschliche Haut, aromatische Amine sind gesundheitlich bedenklich und anorganische Füllstoffe wie Zeolith erhöhen die Viskosität der Einkomponenten-Polyurethan-Reaktivmassen sehr stark. Zeolithe inaktivieren vielfach den zugesetzten Aushärte-Katalysator durch Absorption. Auch die in DE-OS 4 111 654 beschriebenen Silan-Haftvermittler verleihen den Einkomponenten-Polyurethan-Reaktivmassen zwar eine verbesserte Beständigkeit gegenüber der Einwirkung von Feuchtigkeit aus der Luft, es bedarf jedoch einer recht hohen Aufwandsmenge.

Die sich aus dem Stande der Technik ergebende Aufgabe bestand darin, verbesserte Einkomponenten-Polyurethan-Reaktivmassen herzustellen, welche mit einem möglichst geringen Gehalt an Polyetherpolyaminen auskommen und auch nach längerer Lagerung in feuchter Umgebungsluft blasenfrei aushärten.

Es wurde nun überraschend gefunden, daß Einkomponenten-Polyurethan-Reaktivmassen durch Verwendung bestimmter Mischungen von Polyetherpolyolen und Polyesterpolyolen blasenfrei aushärten, selbst wenn diese 3 Tage lang einer relativen Luftfeuchte von 55 % ausgesetzt waren.

Die erfindungsgemäßen Einkomponenten-Polyurethan-Reaktivmassen zeigen außerdem eine gute Beständigkeit gegen hohe Einbrenntemperaturen zwischen 180 und 200°C, insbesondere bei Verwendung von 3,3'-Diisocyanato-4,4'-dimethyl-N,N'-diphenylharnstoff als Isocyanatkomponente. Mit anderen Isocyanaten treten bei diesen Temperaturen Erweichung, Zersetzung und Schaumbildung auf.

Gegenstand der Erfindung sind heißhärtende Einkomponenten-Polyurethan-Reaktivmassen auf der Basis von
A) Polyisocyanaten,
B) höhermolekularen Verbindungen mit reaktiven H-Atomen,
C) gegebenenfalls niedermolekularen Kettenverlängerungsmitteln oder Vernetzern,
D) gegebenenfalls Weichmachern
E) gegebenenfalls PU-Katalysatoren und
F) gegebenenfalls üblichen Hilfs- und Zusatzstoffen,
dadurch gekennzeichnet, daß als
Komponente A) eingesetzt werden oberflächenmodifizierte Polyisocyanate, deren NCO-Gruppen an der Oberfläche zu 0,1 bis 25 Äquivalentprozent, bezogen auf Gesamtzahl der NCO-Gruppen, durch Polyaddukt-Bildung desaktiviert sind, und als
Komponente B) eingesetzt wird ein Gemisch aus
   B1) 5 bis 40 Gew.-% (bezogen auf B) mindestens eines aliphatischen Polyetherpolyamins und
   B2) 95 bis 60 Gew.-% (bezogen auf B) eines Polyol-Gemisches, welches seinerseits besteht aus:
   i) 10 bis 60 Gew.-% (bezogen auf B2) mindestens eines Polyesterpolyols, welches Kohlensäureester und/oder Polycarbonsäureesterstrukturen aufweist, und
   ii) 90 bis 40 Gew.-% (bezogen auf B2) mindestens eines Polyetherpolyols,
wobei Komponente A) in Komponente B) suspendiert ist.

Gegenstand der Erfindung ist ferner die Verwendung der heißhärtenden Einkomponenten-Polyurethan-Reaktivmassen, die nach dem erfindungsgemäßen Verfahren erhältlich sind, als Beschichtungs-, Verklebungs-Antidröhn- sowie als Nahtabdichtungsmassen.
A) Als Ausgangskomponenten für die erfindungsgemäß eingesetzten, oberflächenmodifizierten, Polyisocyanate A) sind alle Di- oder Polyisocyanate oder deren beliebige Gemische geeignet, sofern sie einen Schmelzpunkt oberhalb 40°C, bevorzugt oberhalb 80°C, besonders bevorzugt oberhalb 130°C, aufweisen.
Es können dies aliphatische, cycloaliphatische, araliphatische, bevorzugt aber aromatische oder heterocyclische Polyisocyanate sein, ferner Polyphenyl-polymethylen-polyisocyanate, erhalten durch Anilin-Formaldehyd-Kondensation und anschließende Phosgenierung, z.B. nach den britischen Patentschriften 874 430 und 848 671, weiterhin perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate, Urethan- und/oder Harnstoffgruppen aufweisende Polyisocyanate, acylierte Harnstoffgruppen aufweisende Polyisocyanate, Biuretgruppen aufweisende Polyisocyanate, durch Telomerisationsreaktion hergestellte Polyisocyanate, Estergruppen aufweisende Polyisocyanate, bevorzugt Uretdiongruppen aufweisende Diisocyanate und Harnstoffgruppen aufweisende Diisocyanate.
Beispielhaft seien genannt:

| | | |
|---|---|---|
| p-Xylylendiisocyanat | Fp.: | 45-46°C |
| 1,5-Diisocyanatomethylnaphthalin | | 88-89°C |
| 1,3-Phenylendiisocyanat | | 51°C |
| 1,4-Phenylendiisocyanat | | 94-96°C |
| 1-Methylbenzol-2,5-diisocyanat | | 39°C |
| 1,3-Dimethylbenzol-4,6-diisocyanat | | 70-71°C |
| 1,4-Dimethylbenzol-2,5-diisocyanat | | 76°C |
| 1-Nitrobenzol-2,5-diisocyanat | | 59-61°C |
| 1,4-Dichlorbenzol-2,5-diisocyanat | | 134-137°C |
| 1-Methoxybenzol-2,4-diisocyanat | | 75°C |
| 1-Methoxybenzol-2,5-diisocyanat | | 89°C |
| 1,3-Dimethoxybenzol-4,6-diisocyanat | | 125°C |
| Azobenzol-4,4'-diisocyanat | | 158-161°C |
| Diphenylether-4,4'-diisocyanat | | 66-68°C |
| Diphenylmethan-4,4'-diisocyanat | | 42°C |
| Diphenyl-dimethylmethan-4,4'-diisocyanat | | 92°C |
| Naphthalin-1,5-diisocyanat | | 130-132°C |
| 3,3'-Dimethylbiphenyl-4,4'-diisocyanat | | 68-69°C |
| Diphenyldisulfid-4,4'-diisocyanat | | 58-60°C |
| Diphenylsulfon-4,4'-diisocyanat | | 154°C |
| 1-Methylbenzol-2,4,6-triisocyanat | | 75°C |
| 1,3,5-Trimethylbenzol-2,4,6-triisocyanat | | 93°C |
| Triphenylmethan-4,4',4''-triisocyanat | | 89-90°C |
| 4,4'-Diisocyanato-(1,2)-diphenyl-ethan | | 88-90°C |
| dimeres 1-Methyl-2,4-phenylendiisocyanat | | 156°C |
| dimeres 1-Isopropyl-2,4-phenylendiisocyanat | | 125°C |
| dimeres 1-Chlor-2,4-phenylendiisocyanat | | 177°C |
| dimeres 2,4'-Diisocyanato-diphenylsulfid | | 178-180°C |
| 3,3'-Diisocyanato-4,4'-dimethyl-N,N'-diphenylharnstoff | | |
| 3,3'-Diisocyanato-2,2'-dimethyl-N,N'-diphenylharnstoff | | |
| 3,3'-Diisocyanato-2,4'-dimethyl-N,N'-diphenylharnstoff | | |
| N,N'-Bis[4(4-Isocyanatophenylmethyl)phenyl]harnstoff | | |
| N,N'-Bis[4(2-Isocyanatophenylmethyl)phenyl]harnstoff. | | |

Erfindungsgemäß bevorzugt werden dimeres 1-Methyl-2,4-diisocyanatobenzol, dimeres 4,4'-Diisocyanato-diphenylmethan, der 3,3'-Diisocyanato-4,4'- oder -2,2'- oder -2,4'-dimethyl-N,N'-diphenylharnstoff, oder Modifizierungsprodukte von 3,3'-Diisocyanato-4,4'- oder -2,2'- oder -2,4'-dimethyl-N,N'-diphenylharnstoff mit langkettigen Polyethern und/oder Polyestern, Bis-N,N'-[4-(4-Isocyanatophenylmethyl)-phenyl]-harnstoff und Naphthalin-1,5-diisocyanat. Die dimeren Diisocyanate können auch durch in situ-Dimerisierung, z.B. in Weichmachern, Lösungsmitteln, Wasser oder Polyolen feinverteilt hergestellt und gegebenenfalls in dieser Form der Stabilisierung unterworfen werden.
Als Stabilisatoren für die genannten Polyisocyanate werden z.B. zwei- oder mehrfunktionelle, nieder- oder höhermolekulare Verbindungen mit aliphatisch gebundenen, primären und/oder sekundären Aminogruppen und einem Molekulargewicht von 60 bis etwa 6000, vorzugsweise 60 bis 3000, eingesetzt. Es sind dies niedermolekulare und/oder höhermolekulare primäre und/oder sekundäre Polyamine, bevorzugt mit Funktionalitäten von 2 bis 3, oder ihre Mischungen. Die Aminogruppen sind dabei an aliphatische Gruppen (einschließlich cycloaliphatische, oder an den aliphatischen Rest von araliphatischen Gruppen) gebunden. Die aliphatischen bzw. cycloaliphatischen Di- und Polyamine können gegebenenfalls neben den Aminogruppen auch noch OH-Gruppen, tertiäre Aminogruppen, Ethergruppen, Thioethergruppen, Urethangruppen, Harnstoffgruppen, Carboxylgruppen, Carbonsäurealkylestergruppen, Sulfonatgruppen, Carboxylatgruppen oder Sulfonsäureestergruppen aufweisen.
Erfindungsgemäß einsetzbare Di- und Polyamine sind z.B. Ethylendiamin, 1,2- und 1,3-Propandiamin, 1,4-Butandiamin, 1,6-Hexandiamin, Neopentandiamin, 2,2,4- und 2,4,4-Trimethyl-1,6-diaminohexan, 2,5-Dimethyl-2,5-diaminohexan, 1,10-Decandiamin, 1,11-Undecandiamin, 1,12-Dodecandiamin, Bis-aminomethyl-hexahydro-4,7-methano-indan (TCD-Diamin), 1,3-Cyclohexandiamin, 1,4-Cyclohexandiamin, 1-Amino-3,3,5-trimethyl-5-aminomethyl-cyclohexan (Isophorondiamin), 2,4- und/oder 2,6-Hexahydrotoluylendiamin, 2,4'- und/oder 4,4'-Diaminodicyclohexylmethan, m- oder p-Xylylendiamin, Bis-(3-aminopropyl)-methylamin, Bis-N,N'-(3-aminopropyl)-piperazin und 1-Amino-2-aminomethyl-3,3,5-(3,5,5)-trimethyl-cyclopentan, 2,2-Dialkylpentan-1,5-diamine oder Triamine wie 1,5,11-Triaminoundecan, 4-Aminomethyl-1,8-diaminooctan, Lysinmethylester, cycloaliphatische Triamine gemäß DE-OS 2 614 244, 4,7-Dioxadecan-1,10-diamin, 2,4- und 2,6-Diamino-3,5-diethyl-1-methylcyclohexan und deren Gemische, alkylierte Diaminodicyclohexylmethane, z.B. 3,3'-Dimethyl-4,4'-diamino-dicyclohexylmethan oder 3,5-Diisopropyl-3'-5'-diethyl-4,4'-diaminodicyclohexylmethan, perhydrierte Diaminonaphthaline, perhydrierte Diaminoanthrazene, oder höherwertige Amine wie Diethylentriamin, Triethylentetramin, Pentaethylenhexamin, Dipropylentriamin, Tripropylentetramin oder N,N'-Dimethyl-ethylendiamin, 2,5-Dimethylpiperazin, 2-Methylpiperazin, Piperazin-hydrat, 2-Hydroxy-ethylpiperazin oder 2-(2-Aminoethyl)-aminoethylsulfonsaures Natrium.
Anstelle dieser niedermolekularen aliphatischen Diamine oder im Gemisch hiermit können auch aliphatische Polyetherpolyamine verwendet werden, wie sie z.B. durch reduktive Aminierung von Polyoxyalkylenglykolen mit Ammoniak nach BE-PS 634 741 oder US-PS 3 654 370 erhalten werden können. Weitere Polyether-Polyamine können nach Methoden, wie sie in der Firmenschrift "Jeffamine, Polyoxypropylene Amines" von Texaco Chemical CO., 1978, aufgezählt werden, hergestellt werden, beispielsweise durch Hydrierung von cyanethylierten Polyoxypropylenglykolen (DE-OS 1 193 671), durch Aminierung von Polypropylenglykolsulfonsäureestern (US-PS 3 236 895), durch Behandlung eines Polyoxyalkylenglykols mit Epichlorhydrin und einem primären Amin (FR-PS 1 466 708) oder durch Umsetzung von NCO-Prepolymeren mit Hydroxylgruppen aufweisenden Enaminen, Aldiminen oder Ketiminen und anschließende Hydrolyse gemäß DE-A 2 546 536.
Geeignete höhermolekulare aliphatische Di- und Polyamine sind auch die nach DE-OS 2 948 419 und DE-OS 3 039 600 durch alkalische Hydrolyse von NCO-Prepolymeren (mit aliphatischen Diisocyanaten) mit Basen über die Carbamatstufe zugänglichen Polyamine. Diese höhermolekularen Polyetherpolyamine besitzen Molekulargewichte von etwa 400 bis 6000, vorzugsweise 400 bis 3000 und besonders bevorzugt von 1000 bis 3000.
Die höhermolekularen Polyetherpolyamine werden vorzugsweise in Mischung mit den niedermolekularen Di- und Polyaminoverbindungen, zur Aminstabilisierung der Polyisocyanatteilchen eingesetzt.
Als Stabilisatoren für die genannten Polyisocyanate werden aber auch Hydrazin, Alkylhydrazine sowie N,N'-Dialkylhydrazine, vorzugsweise mit C₁-C₆-Alkylgruppen, die auch als weitere Substituenten Chlor- oder OH-Gruppen tragen können, und/oder zwei- oder mehrfunktionelle, nieder- oder höhermolekulare Verbindungen mit -CO-NH-NH₂-Endgruppen, und einem Molekulargewicht von 32 bis etwa 6000, vorzugsweise 32 bis 3000, eingesetzt. Es sind dies z.B. Hydrazin, zumeist in Form von Hydrazinhydrat, alkylsubstituierte Hydrazine, z.B. Methylhydrazin, Ethylhydrazin, Hydroxyethyl-hydrazin oder N,N'-Dimethylhydrazin. Weitere geeignete Stabilisatoren sind Verbindungen mit Hydrazid-Endgruppen, z.B. Di- oder Polyhydrazide wie Carbodihydrazid, Hydracrylsäurehydrazid, Oxalsäuredihydrazid, Adipinsäuredihydrazid, Terephthalsäuredihydrazid, Isophthalsäurehydrazid oder Verbindungen mit mindestens zwei Hydrazid- und/oder Semicarbazid- und/oder Carbazinester- und/oder Aminogruppen, z.B. β-Semicarbazidopropionsäurehydrazid, 2-Semicarbazidoethylencarbazinester, Aminoessigsäurehydrazid, β-Aminopropionsäurehydrazid oder Biscarbazinester oder Bissemicarbazide wie Ethylen-bis-carbazinester bzw. Ethylen-bis-semicarbazid oder Isophoron-bis-semicarbazid. Bevorzugt sind Hydrazin und niedermolekulare Verbindungen mit -CO-NH-NH₂-Gruppen mit Molekulargewichten von 32 bis 399. Besonders bevorzugt sind Hydrazinhydrat und β-Semicarbazido-propionsäurehydrazid sowie Alkylenbissemicarbazide.
Die Stabilisatoren werden in der Regel in einer Menge von etwa 0,1 bis 25, bevorzugt 0,2 bis 8 Äquivalent-% Amin, bezogen auf Äquivalente Isocyanat der festen feinteiligen Isocyanatkomponente eingesetzt.
Als Reaktionstemperatur bei der Umhüllungsreaktion werden Temperaturen unter den jeweiligen Schmelztemperaturen des Polyisocyanats gewählt. Sie liegen im allgemeinen unter 70°C, bevorzugt bei 0 bis 50°C.
Die Stabilisierung der festen Polyisocyanate durch Polyaddukt-Umhüllung wird in einem flüssigen Medium, das kein gutes Lösungsmittel für die festen Polyisocyanate darstellt, durchgeführt.
Das flüssige Medium kann aus niedermolekularen und/oder bevorzugt höhermolekularen Verbindungen mit reaktiven H-Atomen B) bestehen. Gegebenenfalls können Weichmacher mitverwendet werden.
Die Stabilisierung des bei Raumtemperatur festen Isocyanats erfolgt in der Regel innerhalb weniger Minuten, so daß auch eine kontinuierliche Arbeitsweise bei der Stabilisierungsreaktion möglich ist. Gegebenenfalls können Art und Menge des flüssigen Mediums bei der Stabilisierungsreaktion so gewählt werden, daß ihre Zusammensetzung in Kombination mit Isocyanatkomponente A) direkt derjenigen der heißhärtenden Einkomponenten-Polyurethan-Reaktivmasse entspricht.
B) Als höhermolekulare Verbindungen mit reaktiven H-Atomen B) sind zwei- oder höherwertige Polyhydroxyl- oder Polyaminoverbindungen mit 2 bis 8, vorzugsweise 2 bis 6, Hydroxyl- oder Aminogruppen und einem Molekulargewicht von 400 bis 16000 geeignet.
B1) Die aliphatischen Polyetherpolyamine B1) sind bereits bei den Stabilisatoren für die oberflächenmodifizierten, Polyisocyanate A) erwähnt worden.
B2) Die unter Abschnitt B2) unter Punkt i) genannten Polyesterpolyole sind Hydroxylgruppen aufweisende Polyesterpolyole wie z.B. Umsetzungsprodukte von mehrwertigen, vorzugweise zweiwertigen, und gegebenenfalls zusätzlich drei- und mehrwertigen Alkoholen mit mehrwertigen, vorzugsweise zweiwertigen, Polycarbonsäuren oder deren Anhydriden oder entsprechenden Polycarbonsäureestern von niederen Alkoholen.
   Auch Polyesterpolyole aus Lactonen, z.B. ε-Caprolacton und Polycarbonate kommen in Betracht.

Ausgangsverbindungen für diese Polyesterpolyole sind üblicherweise Glykole oder Mischungen von Glykolen. Beispielhaft seien genannt: Ethylenglykol, Propylenglykol-1,2 und -1,3, Butylenglykol-1,4 und -2,3, Hexandiol-1,6, Octandiol-1,8, Neopentylglykol, 1,4-Bis-hydroxymethylcyclohexan, 2-Methyl-1,3-propandiol, ferner Diethylenglykol, Triethylenglykol, Tetraethylenglykol und höhere Polyethylenglykole, Dipropylenglykol und höhere Polypropylenglykole sowie Dibutylenglykol und höherer Polybutylenglykole. Weniger bevorzugt sind: Glyzerin, Trimethylolpropan, Hexantriol-1,2,6, Butantriol-1,2,4, Trimethylolethan, Pentaerythrit, Chinit, Mannit und Sorbit, Formit und Methylglykosid. Die Glykole für die Herstellung der Polyesterpolyole können vor ihrer Veresterung auch zu niedermolekularen Etherdiolen wie z.B. Bis-(6-hydroxyhexyl)ether verethert werden oder auch zu Esterdiolen abreagieren wie z.B. zum Reaktionsprodukt aus 1 Mol Caprolacton und 1 Mol Hexandiol-1,6.
Als Dicarbonsäuren bzw. Dicarbonsäurederivate für die Herstellung der Polyesterpolyole kommen in Frage: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und/oder trimerisierte ungesättigte Fettsäuren, sowie veresterte Dicarbonsäuren wie Terephthalsäuredimethylester oder Terephthalsäurediglykolester.
Anstelle von Dicarbonsäuren kann auch Kohlensäure, üblicherweise in der Form ihres Dichlorids, Phosgen, oder als Diphenylcarbonat zum Aufbau von Polyesterpolyolen verwendet werden.
Bevorzugt sind Polyesterpolyole aus Glykolen mit längeren Alkylenresten wie beispielsweise Butandiol-1,4 oder Hexandiol-1,6, welche Ester- und/oder Kohlensäureesterstrukturen aufweisen. Ebenfalls bevorzugt sind Polyesterpolyole, hergestellt unter Mitverwendung von Lactonen wie beispielsweise Caprolacton oder Hydroxycarbonsäuren wie beispielsweise ω-Hydroxycapronsäure.
B2) Bei den unter Abschnitt B2), unter Punkt ii) genannten Polyetherpolyolen handelt es sich um mindestens 2, in der Regel 2 bis 8, bevorzugt 2 bis 6 Hydroxylgruppen aufweisende Polyetherpolyole an sich bekannter Art.
Diese können durch Polymerisation von Tetrahydrofuran und/oder Epoxiden wie Ethylenoxid, Propylenoxid, Butylenoxid, Styroloxid oder Epichlorhydrin mit sich selbst oder im Gemisch untereinander oder nacheinander erhalten werden. Diese Epoxide können auch alleine oder im Gemisch untereinander oder auch nacheinander an sogenannte Startverbindungen, welche reaktionsfähige Wasserstoffatome aufweisen, wie z.B. Wasser, Alkohole, Amine, Aminoalkohole und Phenole, angelagert werden. Als Startverbindungen seien beispielhaft genannt: Ethylenglykol, Propylenglykol-1,3 und -1,2, Trimethylolpropan, Glyzerin, Pentaerythrit, 4,4'-Dihydroxydiphenylpropan, Anilin, Ammoniak, Ethanolamin, Diethanolamin, Triethanolamin, Sorbit, Mannit und Ethylendiamin.
Auch mit Sucrose als Startverbindung hergestellte Polyetherpolyole, wie sie z.B. in den DE-AS 1 176 358 und 1 064 938 beschrieben werden, kommen erfindungsgemäß in Frage. Beispiele sind höhermolekulare Polyoxyalkylenpolyole, z.B. Polyoxytetramethylenglykole oder Ethoxylierungs- und/oder Propoxylierungsprodukte von niedermolekularen Di- und Polyolen oder Di- und Polyaminen, z.B. propoxyliertes Trimethylolpropan, propoxyliertes Ethylendiamin oder lineare oder verzweigte Polypropylenglykol ether, die anteilweise in statistischer, blockartiger oder endständiger Form Ethylenoxid enthalten können. Bevorzugt sind Polyetherpolyole mit einer Funktionalität von 2 bis 6 und überwiegend primären Hydroxylgruppen.
Es können auch gegebenenfalls Verbindungen mit reaktiven H-Atomen eingesetzt werden, in welchen hochmolekulare Polyaddukte bzw. Polykondensate oder Polymerisate in feindisperser oder auch gelöster Form enthalten sind. Derartige Verbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den obengenannten Hydroxyl- oder Aminogruppen aufweisenden Verbindungen, ablaufen läßt.
Auch durch Vinylpolymerisate modifizierte Polyamino- oder Polyhydroxylverbindungen, wie sie z.B. durch Polymerisation von Styrol und Acrylnitril in Gegenwart von Polyamino-Polyetherpolyaminen oder -polyolen oder Polycarbonaten erhalten werden, sind für das erfindungsgemäße Verfahren geeignet.
Auch Hydroxylgruppen aufweisende Polybutadiene sind erfindungsgemäß geeignet, da sie besonders elastische und hydrolysestabile Produkte ergeben.
Weitere Vertreter der genannten zu verwendenden Verbindungen sind z.B. in High Polymers, Vol. XVI, "Polyurethans, Chemistry and Technology", verfaßt von Saunders-Frisch, Intersience Publishers, New York, London, Band I, 1962, Seiten 32 bis 42 und Seiten 44 bis 54 und Band II, 1964, Seiten 5 und 6 und 198 bis 199, sowie im Kunststoff-Handbuch, Band VII, Vieweg-Höchtlen, Carl-Hanser-Verlag, München, 1966, z.B. auf den Seiten 45 bis 71, sowie in der DE-A 2 854 384 ausführlich beschrieben.
Es ist selbstverständlich auch möglich, Mischungen der obengenannten Polyamino- oder Polyhydroxylverbindungen einzusetzen.
C) Die gegebenenfalls mitzuverwendenden niedermolekularen Kettenverlängerungsmittel oder Vernetzer sind Verbindungen mit einer Funktionalität von mindestens 2, welche an aliphatische und/oder cycloaliphatische Gruppen gebundene Hydroxylgruppen und Molekulargewichte zwischen 62 und 399 aufweisen. Bevorzugt sind dabei niedermolekulare Polyole mit an aliphatische oder cycloaliphatische Gruppen gebundenen Hydroxylgruppen.
Diese Verbindungen weisen in der Regel 2 bis 8, vorzugsweise 2 bis 6 Hydroxylgruppen auf. Es können selbstverständlich auch Mischungen von verschiedenen Verbindungen verwendet werden. Als Beispiele für derartige Verbindungen seien genannt: Ethylenglykol, Diethylenglykol, Triethylenglykol, Tetraethylenglykol, Trimethylglykol, Butandiol-2,3 und/oder -1,4, Pentandiol-2,5, Hexandiol-1,6, Neopentylglykol, 1,4-Bis-hydroxyethylcyclohexan, 1,4-Dihydroxycyclohexan, Terephthalsäure-bis(β-hydroxyethyl)ester, 1,4,3,6-Dianhydrohexite, 1,4-Monoanhydrotetrite, Propylenglykol, Dipropylenglykol, Tripropylenglykol, Tetrapropylenglykol, Bis-2-hydroxyethyl-hydrochinon, Bis-(2-hydroxyethyl)-resorcin. Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl sowie Formose oder Formit.
Ferner sind geeignet tertiäraminhaltige Di- oder Polyole, z.B. N-Methyldiethanolamin, Triethanolamin oder N,N'-Bis-hydroxyethylpiperazin.
Weiterhin sind niedermolekulare aromatische Di- und Polyamine des Molekulargewichtsbereiches 108 bis 399 geeignet, welche die Aminogruppen auch an heterocyclischen Resten mit aromatischem Charakter gebunden enthalten können.
Als aromatische Polyamine sind z.B. geeignet: p-Phenylendiamin, 2,4-/2,6-Toluylendiamine, Diphenylmethan-4,4'- und/oder -2,4'- und/oder -2,2'-diamine, 3,3'-Dichlor-4,4'-diaminodiphenylmethan, 3-(C₁-C₈-)-Alkyl-4,4'-diaminodiphenylmethane, die 3,3'-Di-(C₁-C₄)- 4,4'-diaminodiphenylmethane sowie die 3,3',5,5'-Tetra-(C₁-C₄)-alkyl-4,4'-diphenylmethane, die 4,4'-Diaminodiphenyl-sulfide, -sulfoxide oder -sulfone, 2,4-Diaminobenzoesäureester nach DE-A 2 025 900, sowie durch eine oder zwei (C₁-C₄)-Alkylgruppen substituierte Toluylendiamine. Besonders bevorzugt sind 3,5-Diethyl-2,4- und/oder -2,6-diaminotoluol (besonders ihre technischen (80/20)- oder (65/35)-Isomerengemische), unsymmetrisch tetraalkylsubstituierte Diaminodiphenymethane, z.B. 3,5-Diethyl-3'-5'-diisopropyl-4,4'-diaminodiphenylmethan und ihre Isomerengemische entsprechend DE-A 2 902 090, 4,4'-Diaminobenzanilid, sowie 3,5-Diaminobenzoesäure-(C₁-C₄)-alkylester, 4,4'- und/oder 2,4'-Diamino-diphenylmethan, 4,4',4"-Triaminotriphenylmethan sowie Naphthylen-1,5-diamin.
D) Als gegebenenfalls mitzuverwendende Weichmacher kommen die an sich bekannten Ester der Phthalsäure, Trimellitsäure, Adipinsäure, Sebacinsäure, Azelainsäure, Phosphorsäure oder Sulfonsäuren, aber auch z.B. der Ölsäure und der Stearinsäure mit aliphatisch oder aromatisch gebundene OH-Gruppen enthaltenden Verbindungen wie z.B. Alkoholen oder Phenolen in Frage. Beispiele für derartige Ester sind: Bis-(2-ethylhexyl)phtalat, Benzylbutylphtalat, Tris-(2-ethylhexyl)trimellitat, Bis-(2-ethylhexyl)adipat, Trikresylphosphat, Diphenylkresylphosphat, Diphenyloctylphosphat, Tris-(2-ethylhexyl)phosphat, (C₁₀-C₁₈)Alkylsulfonsäurephenylester. Auch Kohlenwasserstoffe wie sogenannte Butadienöle oder z.B. Diisopropylnaphthalin können mitverwendet werden.
E) Als gegebenenfalls mitzuverwendende Polyurethan-Katalysatoren können die an sich bekannten Polyurethan-Katalysatoren, mit besonders gutem Effekt organische Metallverbindungen, verwendet werden, gegebenenfalls unter Mitverwendung weiterer, üblicher Polyurethankatalysatoren, insbesondere von tert.-Amin-haltigen Katalysatoren.
Als organische Metallverbindungen kommen insbesondere organische Zinn-, Zink-, Blei-, Quecksilber-, Eisen- und Wismutverbindungen als Katalysatoren in Frage.
Als organische Zinnverbindungen kommen vorzugsweise Zinn(II)-salze von Carbonsäuren wie Zinn(II)-bis-ethylhexanoat und Zinn(II)-stearat und die Dialkylzinnsalze von Carbonsäuren, wie z.B. Dibutylzinn-dilaurat und Dioctylzinndiacetat oder Dialkylzinn-Estermercaptide in Betracht. Als organische Zinkverbindungen kommen vorzugsweise Zink-bis-ethylhexanoat und Zink-bis-acetylacetonat in Betracht. Als organische Bleiverbindungen kommen vorzugsweise Blei(II)-salze von Carbonsäuren wie Blei(II)-naphthenat, Blei(II)-bis-ethylhexanoat, Blei(II)-stearat, aber auch z.B. Blei(II)-bis-diethyldithiocarbamat in Betracht. Als organische Quecksilberverbindung kommt z.B. Phenylquecksilberpropionat in Betracht. Als organische Eisenverbindung kommt z.B. Eisen(III)-acetylacetonat, als organische Wismut-Verbindungen kommen vorzugsweise Wismut(III)-ethylhexonoat und Wismut(III)-neodecanoat in Betracht. Aus Gründen des Umweltschutzes und der Arbeitshygiene sind Blei und Quecksilber enthaltende Katalysatoren weniger bevorzugt.
Als tert.-Amin-haltige Katalysatoren seien beispielhaft genannt: Triethylamin, Tributylamin, N,N,N',N'-Tetramethyl-ethylendiamin, 1,4-Diaza-bicyclo(2,2,2)-octan, N,N-Dimethylbenzylamin, N,N-Dimethylcyclohexylamin.
Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl Hanser Verlag, München 1966, z.B. auf den Seiten 96 bis 102, beschrieben. Die Katalysatoren werden in der Regel in einer Menge zwischen etwa 0,001 und 10 Gew.-%, bezogen auf die Gesamtzusammensetzung eingesetzt.
F) Als gegebenenfalls mitzuverwendende Hilfs- und Zusatzstoffe seien beispielhaft genannt: Farbstoffe, Pigmente, Füllstoffe wie Silicagel, Gips, Talkum, Calciumcarbonat, Bariumsulfat, Ruß, Aktivkohle, Metallpulver, UV-Absorptionsmittel oder Stabilisatoren wie phenolische Antioxidantien, Lichtschutzmittel, oberflächenaktive Zusatzstoffe wie Tenside oder Verlaufhilfsmittel, Antiblockmittel, Silikone, Flammschutzmittel oder fungistatisch und/oder bakteriostatisch wirkende Substanzen. Es können auch weitere, aus der Lacktechnologie an sich bekannte Hilfs- und Zusatzmittel wie Rheologiehilfsmittel oder inerte Lösungsmittel enthalten sein.

Verfahren zur Herstellung der erfindungsgemäßen Reaktivmasse

Die Stabilisierungsreaktion, die zu den oberflächenmodifizierten, Polyisocyanaten führt, wird, wie vorhergehend beschrieben, zweckmäßigerweise in der Mischung der Komponenten B) sowie gegebenenfalls C), D) und E) durchgeführt und führt so direkt zur anwendungsfertigen Einkomponenten-Polyurethan-Reaktivmasse.

Selbstverständlich ist es auch möglich, die Stabilisierungsreaktion separat auszuführen, das oberflächenmodifizierte, Polyisocyanat dann in einem weiteren Verarbeitungsschritt mit der Komponente B) sowie gegebenenfalls C), D) und E) zur anwendungsfertigen Einkomponenten-Polyurethan-Reaktivmasse zu vermischen.

Diese sehr gut streich- und spritzfähigen Einkomponenten-Polyurethan-Reaktivmassen stellen heterogene Suspensionen der oberflächenmodifizierten, Polyisocyanate in den Polyamin- und Polyol-Komponenten dar.

Ein besonderes Merkmal der Einkomponenten-Polyurethan-Reaktivmasse ist, daß ihre Verfestigung oberhalb einer durch Menge und Art des Stabilisierungsamins bestimmten sogenannten Aufdickungstemperatur unter praktisch augenblicklichem Verlust der Fließfähigkeit beginnt. Das bedeutet, daß einerseits bis dicht unterhalb dieser Temperatur lange Verarbeitungszeiten und Fließwege möglich sind, andererseits aber durch die nach Überschreiten der Aufdickungstemperatur unmittelbar folgende Verdickung der Reaktivmasse ein Fließen oder gar Abtropfen unmöglich gemacht wird.

Die erfindungsgemäßen Einkomponenten-Polyurethan-Reaktivmassen haben insbesondere im Hinblick auf lange Verarbeitungszeiten den Vorteil, daß die Feuchtigkeit der Umgebungsluft auch bei längerem Lagern in unausgehärtetem Zustand nicht zu einer unerwünschten Blasenbildung bei der Heißhärtung führt.

Die Aushärtung der erfindungsgemäßen Einkomponenten-Polyurethan-Reaktivmasse erfolgt im allgemeinen durch Einwirkung von Wärme im Temperaturbereich von 80 bis 200°C, vorzugsweise von 90 bis 160°C.

Die erfindungsgemäßen Einkomponenten-Polyurethan-Reaktivmassen eignen sich als Beschichtungs-, Verklebungs-, Antidröhn- sowie als Nahtabdichtungsmassen für Konstruktionen aus Blech oder nicht-metallischen Werkstoffen.

Bevorzugt ist eine Verwendung als Nahtabdichtungsmasse und Unterbodenschutzmasse im Karosseriebau sowohl aufgrund der guten Haftung auf unbehandeltem und auf kathodisch tauchlackiertem Stahlblech, als auch wegen der guten Dauerflexibilität und Überbrennfestigkeit.

### Ausführungsbeispiele

Verwendete Rohstoffe:

| | |
|---|---|
| 1. T 5000: | Polyoxypropylenethertriamin vom Molekulargewicht 5000 (Jeffamine T 5000®, der Fa. TEXACO), Äquivalentgewicht 1667 |
| | |
| 2. Polyetherpolyol: | Polyoxypropylenpolyoxyethylenetherhexol mit 13,2 % Ethylenoxid-Endblock, gestartet auf Sorbit, Molekulargewicht 12000, Äquivalentgewicht 2000 (VPLS 2131 der Bayer AG) |
| | |
| 3. Polyesterpolyol 1: | Polyesterdiol mit Molekulargewicht 2000, hergestellt aus Adipinsäure, Ethylenglykol, Diethylenglykol und Butandiol-1,4, Äquivalentgewicht 1000 (Desmophen 1652 der Bayer AG) |
| | |
| 4. Polyesterpolyol 2: | Polyesterdiol mit Molekulargewicht 2000, hergestellt aus dem Reaktionsprodukt von 1 mol Hexandiol-1,6 mit 1 mol Caprolacton durch Umsetzung mit Diphenylcarbonat, Äquivalentgewicht 100. |
| | |
| 5. BaSO₄: | Schwerspat (EWO 423N der Fa. Sachtleben) |
| | |
| 6. TiO₂: | Bayertitan® R-KB4 der Fa. Bayer AG |
| | |
| 7. Cab-o-sil: | Durch Silanisierung mit Trimethylchlorsilan hydrophobierte pyrogene Kieselsäure (Cab-o-sil® TS 720 der Fa. Cabot Corp.) |
| | |
| 8. Coscat 83: | 30%ige Lösung von Wismuttrisneodecanoat in Testbenzin (COSCAT 83® der Fa. Cosan Corp.) |
| | |
| 9. AMMO: | γ-Aminopropyltrimethoxysilan (Dynasylan AMMO® der Fa. Dynamit Nobel) |
| | |
| 10. T 403: | Polyoxypropylenethertriamin vom Molekulargewicht 403 (Jeffamine T 403® der Fa. TEXACO) |
| | |
| 11. TDIH: | oberflächenmodifiziertes, feinteiliges Polyisocyanat: Polyetherpolyurethan-modifizierter 3,3'-Diisocyanato-4,4'-dimethyl-N,N'-diphenylharnstoff mit einem NCO-Gehalt von 21,4 % und einem Korngrößenverteilungsmaximum bei 4 um, hergestellt aus einem Semiprepolymer aus 94 Gew.-Teilen 2,4-Toluylendiisocyanat und 6 Gew.-Teilen Polyoxypropylenetherdiol, Molekulargewicht 2000 (gemäß DE 3 826 447) |

Zur Herstellung der erfindungsgemäßen Einkomponenten-Polyurethan-Reaktivmassen wird zuerst eine Härterpaste auf Basis von TDIH hergestellt.

### Beispiel 1

### Herstellung einer Härterpaste auf Basis von TDIH (= Rezepturbestandteil 12.)

In einer Mischung aus 55,36 Gew.-Teilen Polyetherpolyol (2.) und 0,36 Gew.-Teilen T 403 (10.) werden am Dissolver (1 Minute lang bei 1800 U/min) 44,28 Gew.-Teile TDIH (11.) gleichmäßig suspendiert. Man entgast eine halbe Stunde im Vakuum bei 25°C. Man erhält eine fließfähige, lagerstabile TDIH-Paste mit einer Aufdicktemperatur von 95°C (gemessen nach Zusatz von 1 Gew.-% Coscat 83), einer Viskosität von 60 Pa.s bei 25°C und einem verfügbaren NCO-Gehalt von 7,81 %. Der NCO-Gehalt ist berechnet aus dem Gesamtgehalt der im TDIH ursprünglich enthaltenen NCO-Gruppen, abzüglich der vom T 403 verbrauchten NCO-Gruppen und abzüglich der NCO-Gruppen, die von den im Polyetherpolyol der Härterpaste enthaltenen OH-Gruppen bei der späteren Aushärtung verbraucht werden. Die Härterpaste bleibt bei Raumtemperatur mindestens 6 Monate in der Viskosität unverändert.

### In den Beispielen 2 bis 6 wird sie benutzt zur Herstellung der Einkomponenten-Polyurethan-Reaktivmassen. Die Rezepturverhältnisse sind in Tabelle 1 wiedergegeben.

### Beispiele 2 bis 6

Pigmentierte, heißhärtende Einkomponenten-Polyurethan-Reaktivmassen

Die Herstellung der Einkomponenten-Polyurethan-Reaktivmassen erfolgt einheitlich:

Die jeweiligen Rezepturbestandteile (1 bis 4) (Tabelle 1) werden im Mischgefäß vorgelegt. Die Füllstoffe und Pigmente (Rezepturbestandteile 5 bis 7) werden nacheinander zugefügt und mit dem Dissolver 30 Minuten lang dispergiert, so daß die Temperatur nicht über 80°C ansteigt. Nach Abkühlen auf Raumtemperatur werden die Hilfsstoffe (Rezepturbestandteile 8 und 9) zugesetzt und 2 Minuten lang gleichmäßig eingerührt. Anschließend wird die im Beispiel 1 hergestellte Härterpaste (Rezepturbestandteil 12) zugesetzt und die Mischung in einem Vakuummischer 30 Minuten lang entlüftet und homogenisiert: Die Mengenverhältnisse sind stets so bemessen, daß ein Äquivalent-Verhältnis von NCO : (OH+NH₂) von 1,25 vorliegt.

**Tabelle I**

| Rezeptur der Einkomponenten-Polyurethan-Reaktivmassen Beispiele 2 bis 6 | | | | | |
|---|---|---|---|---|---|
| | Beispiel 2 (Vergleich) | Beispiel 3 (Vergleich) | Beispiel 4 (Vergleich) | Beispiel 5 (erfindungsgemäß) | Beispiel 6 (erfindungsgemäß) |
| 1. Polyetherpolyol | 261,5 | 0 | 181,9 | 114,4 | 106,1 |
| 2. Polyesterpolyol 1 | 0 | 232,9 | 181,9 | 0 | 106,1 |
| 3. T 5000 | 130,7 | 116,4 | 0 | 87,5 | 159,0 |
| 4. Polyesterpolyol 2 | 0 | 0 | 0 | 131,1 | 0 |
| 5. BaSO₄ | 436,8 | 436,8 | 436,8 | 436,8 | 436,8 |
| 6. TiO₂ | 8,7 | 8,7 | 8,7 | 8,7 | 8,7 |
| 7. Cab-o-sil | 43,7 | 43,7 | 43,7 | 43,7 | 43,7 |
| 8. Coscat 83 | 1,7 | 1,7 | 1,7 | 1,7 | 1,7 |
| 9. AMMO | 4,4 | 4,4 | 4,4 | 4,4 | 4,4 |
| 12. Härterpaste gemäß Beispiel 1 | 112,5 | 155,4 | 140,9 | 171,7 | 133,5 |

Die so erhaltenen leicht streichfähigen Einkomponenten-Polyurethan-Reaktivmassen werden auf kathodisch tauchlackierten Blechen in 2 mm Schichtdicke aufgetragen.

Die so beschichteten Bleche werden zur Überprüfung der Beständigkeit gegen im ungehärtetem Zustand aufgenommene Luftfeuchte (Feuchtraumbeständigkeit) eine bestimmte Zeit bei 23°C und 55 % rel. Luftfeuchte gelagert und anschließend in einem Umlufttrockenschrank eingebrannt sowie auf blasenfreie Aushärtung und klebfreie Oberfläche geprüft.

Zur Prüfung der Überbrennfestigkeit werden kathodisch tauchlackierte Bleche mit den obengenannten Einkomponenten-Polyurethan-Reaktivmassen der Beispiele 2 bis 6 in Form von ca. 8 mm dicken "Raupen" mit Hilfe einer Kartuschenpistole belegt und direkt in einem Umlufttrockenschrank 30 Minuten bei 120°C eingebrannt. Anschließend werden die Bleche erneut 30 Minuten lang auf 180°C bzw. 190°C erhitzt. Nach Abkühlen auf Raumtemperatur werden die Raupen aufgeschnitten und das Erscheinungsbild der ausgehärteten Massen bewertet. Sie sollen an den Schnittstellen kompakt, fest und blasenfrei sein.

Zur Bestimmung der Shore A-Härte werden die oben genannten Einkomponenten-Polyurethan-Reaktivmassen in 8 mm Schichtdicke in Aluminiumschalen von 5 cm Durchmesser eingebracht und 30 Minuten bei 120°C ausgehärtet. Nach Abkühlung auf Raumtemperatur wird die Shore A-Härte gemäß DIN 53505 bestimmt.

Die Ergebnisse der Prüfungen sind in Tabelle 2 zusammengefaßt.

| | Beispiel 2 (Vergleich) | Beispiel 3 (Vergleich) | Beispiel 4 (Vergleich) | Beispiel 5 (erfindungsgemäß) | Beispiel 6 (erfindungsgemäß) |
|---|---|---|---|---|---|
| Shore A-Härte gemäß DIN 53505 | 54 | 39 | 30 | 70 | 56 |
| Feuchtigkeitsbeständigkeit nach 1 h | i.O | klebrige Oberfläche | Blasenbildung | i.O | i.O |
| nach 4 h | i.O | nicht geprüft | nicht geprüft | i.O | i.O |
| nach 64 h | Blasenbildung | nicht geprüft | nicht geprüft | Blasenbildung | i.O |
| Erscheinungsbild nach Überbrennen 30 min bei 180°C | durch Zersetzung gebildete große Hohlräume | nicht geprüft | nicht geprüft | praktisch i.o., nur sehr geringe Schaumbildung | i.O |
| 30 min bei 190°C | durch Zersetzung gebildete große Hohlräume | nicht geprüft | nicht geprüft | stärkere Schaumbildung | i.O |
| i.O. = in Ordnung; entspricht den Anforderungen | | | | | |

### Bewertung:

Die Einkomponenten-Polyurethan-Reaktivmasse gemäß Beispiel 2 zeigt ausreichende Feuchtraumbeständigkeit bis zu 4 Stunden, besitzt jedoch zu geringe Überbrennfestigkeit.

Die Einkomponenten-Polyurethan-Reaktivmassen gemäß den Beispielen 3 und 4 zeigen keinerlei Beständigkeit gegenüber Luftfeuchte und sind für praktische Anwendungen auch zu weich. Die erfindungsgemäßen Einkomponenten-Polyurethan-Reaktivmassen gemäß den Beispielen 5 und 6 sind beständig gegen Luftfeuchtigkeit, im Fall des Beispieles 6 sogar bis zu 64 Stunden, und weisen eine ausreichende Überbrennfestigkeit von bis zu 180°C bzw. 190°C auf.

## Patentansprüche

1. Heißhärtende Einkomponenten-Polyurethan-Reaktivmassen auf der Basis von
A) Polyisocyanaten,
B) höhermolekularen Verbindungen mit reaktiven H-Atomen,
C) gegebenenfalls niedermolekularen Kettenverlängerungsmitteln oder Vernetzern,
D) gegebenenfalls Weichmachern
E) gegebenenfalls PU-Katalysatoren und
F) gegebenenfalls üblichen Hilfs- und Zusatzstoffen,
dadurch gekennzeichnet, daß als
Komponente A) eingesetzt werden oberflächenmodifizierte Polyisocyanate, deren NCO-Gruppen an der Oberfläche zu 0,1 bis 25 Äquivalentprozent, bezogen auf Gesamtzahl der NCO-Gruppen, durch Polyaddukt-Bildung desaktiviert sind, und als
Komponente B) eingesetzt wird ein Gemisch aus
B1) 5 bis 40 Gew.-% (bezogen auf B) mindestens eines aliphatischen Polyetherpolyamins und
B2) 95 bis 60 Gew.-% (bezogen auf B) eines Polyol-Gemisches, welches seinerseits besteht aus:
i) 10 bis 60 Gew.-% (bezogen auf B2) mindestens eines Polyesterpolyols, welches Kohlensäureester und/oder Polycarbonsäureesterstrukturen aufweist, und
ii) 90 bis 40 Gew.-% (bezogen auf B2) mindestens eines Polyetherpolyols,
wobei Komponente A) in Komponente B) suspendiert ist.

2. Heißhärtende Einkomponenten-Polyurethan-Reaktivmassen gemäß Anspruch 1, dadurch gekennzeichnet, daß als oberflächenmodifizierte Polyisocyanate A) 3,3'-Diisocyanato-4,4'-dimethyl-N,N'-diphenylharnstoff und/oder 3,3'-Diisocyanato-2,2'-dimethyl-N,N'-diphenylharnstoff und/oder 3,3'-Diisocyanato-2,4'-dimethyl-N,N'-diphenylharnstoff eingesetzt werden.

3. Heißhärtende Einkomponenten-Polyurethan-Reaktivmassen gemäß Anspruch 2, dadurch gekennzeichnet, daß als oberflächen modifizierte Polyisocyanate A) Modifizierungsprodukte von 3,3'-Diisocyanato-4,4'-dimethyl-N,N'-diphenylharnstoff und/oder 3,3'-Diisocyanato-2,2'-dimethyl-N,N'-diphenylharnstoff mit langkettigen Polyethern und/oder Polyestern eingesetzt werden.

4. Verwendung der heißhärtenden Einkomponenten-Polyurethan-Reaktivmassen gemäß Anspruch 1 bis 3, als Beschichtungs-, Verklebungs-, Antidröhn- sowie als Nahtabdichtungsmassen.

## Claims

1. Heat curing single component polyurethane reactive compositions based on:
A) polyisocyanates,
B) relatively high molecular weight compounds having reactive H atoms,
C) optionally low molecular weight chain extenders or crosslinking agents,
D) optionally plasticisers,
E) optionally PU catalysts and
F) optionally conventional auxiliary substances and additives,
characterised in that
the component A) used comprises surface-modified polyisocyanates, 0.1 to 25 equivalent percent of the surface NCO groups of which, relative to the total number of NCO groups, are deactivated by polyadduct formation and the component B) used comprises a mixture prepared from
B1) 5 to 40 wt.% (relative to B) of at least one aliphatic polyether polyamine and
B2) 95 to 60 wt.% (relative to B) of a polyol mixture which in turn consists of:
i) 10 to 60 wt.% (relative to B2) of at least one polyester polyol which has carbonic acid ester and/or polycarboxylic acid ester structures and
ii) 90 to 40 wt.% (relative to B2) of at least one polyether polyol,
wherein component A) is suspended in component B).

2. Heat curing single component polyurethane reactive compositions according to claim 1, characterised in that 3,3'-diisocyanato-4,4'-dimethyl-N,N'-diphenylurea and/or 3,3'-diisocyanato-2,2'-dimethyl-N,N'-diphenylurea and/or 3,3'-diisocyanato-2,4'-dimethyl-N,N'-diphenylurea are used as the surface-modified polyisocyanates A).

3. Heat curing single component polyurethane reactive compositions according to claim 2, characterised in that modification products of 3,3'-diisocyanato-4,4'-dimethyl-N,N'-diphenylurea and/or 3,3'-diisocyanato-2,2'-dimethyl-N,N'-diphenylurea with long-chain polyethers and/or polyesters are used as the surface-modified polyisocyanates A).

4. Use of the heat curing single component polyurethane reactive compositions according to claims 1 to 3 as coating, adhesive, anti-drumming and seam sealing compositions.

## Revendications

1. Masses réactives thermodurcissables de polyuréthannes à un composant , à base de :
A) polyisocyanates ;
B) composés de poids moléculaire élevé, avec des atomes H réactifs ;
C) facultativement, des agents d'allongement de chaîne ou de réticulation, de faible poids moléculaire ;
D) facultativement, des plastifiants ;
E) facultativement, des catalyseurs de PU, et
F) facultativement, des adjuvants et auxiliaires usuels,
caractérisées en ce que l'on met en oeuvre comme composant A), des polyisocyanates modifiés superficiellement, dont les radicaux NCO sont désactivés en surface par formation d'un polyadduit, à 0,1 à 25% en équivalents, sur base du nombre total de radicaux NCO, et comme composant B), on met en oeuvre un mélange de :
B1) 5 à 40% en poids (sur base de B) d'au moins une polyéther-polyamine aliphatique, et
B2) 95 à 60% en poids (sur base de B) d'un mélange de polyols, lequel consiste pour sa part, en :
i) 10 à 60% en poids (sur base de B2) d'au moins un polyester-polyol, lequel présente des structures ester d'acide carbonique et/ou polyester d'acide carboxylique, et
ii) 90 à 40% en poids (sur base de B2) d'au moins un polyéther-polyol,
où le composant A) est mis en suspension dans le composant B).

2. Masses réactives thermodurcissables de polyuréthannes à un composant suivant la revendication 1, caractérisées en ce que l'on met en oeuvre comme polyisocyanate modifié superficiellement A), la 3,3'-diisocyanato-4,4'-diméthyl-N,N'-diphénylurée et/ou la 3,3'-diisocyanato-2,2'-diméthyl-N,N'-diphénylurée et/ou la 3,3'-diisocyanato-2,4'-diméthyl-N,N'-diphénylurée.

3. Masses réactives thermodurcissables de polyuréthannes à un composant suivant la revendication 2, caractérisées en ce que l'on met en oeuvre comme polyisocyanate modifié superficiellement A), les produits de modification de la 3,3'-diisocyanato-4,4'-diméthyl-N,N'-diphénylurée et/ou de la 3,3'-diisocyanato-2,2'-diméthyl-N,N'-diphénylurée avec des polyéthers et/ou polyesters à longue chaîne.

4. Utilisation des masses réactives thermodurcissables de polyuréthannes à un composant suivant les revendications 1 à 3, comme masses de revêtement, d'encollage, antivrombissante ainsi que comme masses d'étanchéification de joint.
